# EUROPEAN PATENT APPLICATION

(11) **EP 3 470 358 A1**
(43) Date of publication of application: **17.04.2019**
(21) Application number: 17195729.3
(22) Date of filing: 10.10.2017
(51) Int. Cl.: B66B 11/04, H02K 41/02

(54) **STATOR BEAM OF AN ELECTRIC LINEAR MOTOR FOR AN ELEVATOR, AN ELEVATOR AND A METHOD FOR MANUFACTURING THE STATOR BEAM**

(71) Applicant: KONE Corporation, 00330 Helsinki (FI)
(72) Inventor: HAKALA, Tero, 00330 HELSINKI (FI); PUROSTO, Tero, 00330 HELSINKI (FI); KELA, Jarmo, 00330 HELSINKI (FI); PELTO-HUIKKO, Raimo, 00330 HELSINKI (FI); ELO, Antti, 00330 HELSINKI (FI)
(74) Representative: Berggren Oy, Helsinki & Oulu

(57) **Abstract**

A stator beam (16) of an electric linear motor for an elevator (100), a method for manufacturing said stator beam (16) and an elevator (100) are presented. The stator beam (16) comprises a beam part (36) made of non-magnetic material, such as glass or carbon fibre composite, and at least one stator (17) arranged to extend on a side of the beam part (36) along the stator beam (16).

## Description

### TECHNICAL FIELD

The invention concerns in general the technical field of elevators. The invention concerns especially, however, not exclusively, elevators utilizing electric linear motors and, particularly, the stator beams thereof.

### BACKGROUND

At the present time, the elevators utilizing electric linear motors are being developed. The movement of the elevator car is produced by the mover in electromagnetic engagement with the stator of the electric linear motor. The stator is being arranged in fixed manner with respect to the environment, that is, the elevator shaft, and the mover is coupled to the elevator car and, thus the elevator car moves by the mover. The stator of the electric linear motor is arranged to a stator beam which essentially extends along the length of the elevator shaft.

In earlier attempts, the stator beam has been made of ferrous metal material having high density and magnetic properties suitable for operating as a part of the magnetic circuit of the motor, in order to endure the loading caused by the coils of the stator arranged to the stator beam for producing a varying magnetic field for moving the mover along the stator beam.

In case of very long elevator shafts, especially the ones arranged in vertical direction, such as in tall buildings, the conventional stator beam can become extremely massive and in some case can become even too heavy to endure its weight. Furthermore, the stator beam also requires strong fastening means for coupling the stator beam to the elevator shaft.

There is thus still a need for developing stator beams of an electric linear motor for elevators which are not as massive and, therefore, facilitate arranging the stator beam to targets, such as tall buildings.

### SUMMARY

An objective of the present invention is to provide a stator beam, an elevator and a method for manufacturing the stator beam. Another objective of the present invention is that the stator beam and the elevator facilitate installing the stator beam of the elevator, e.g. to a wall or support structure in an elevator shaft, and the manufacturing the stator beam.

The objectives of the invention are reached by a stator beam, an elevator and a method as defined by the respective independent claims.

According to a first aspect, a stator beam of an electric linear motor for an elevator is provided. The stator beam comprises a beam part made of non-magnetic material and at least one stator arranged to extend on a side of the beam part along the stator beam.

The stator beam may comprise at least two stators, made of ferromagnetic material, arranged on opposite sides of the stator beam.

The stator beam, preferably the beam part thereof, may be hollow or may have a through-hole in a longitudinal direction of the stator beam.

The beam part may comprise non-metal material.

The beam part may comprise a fibre reinforced polymer composite.

The fibre reinforced polymer composite may comprise aramid fibre, carbon fibre or glass fibre.

The fibre reinforced polymer composite may comprise fabric or weave type reinforcement. The reinforcement may 3D (three-dimensional) printed or 3D woven, that is, by utilizing an additive manufacturing method.

The fibre reinforced polymer composite may comprise non-elastomeric polymer matrix material.

Non-elastomeric polymer matrix may comprise epoxy resin, phenolic plastic, polyester or vinyl ester.

Fibres of the fibre reinforced polymer composite may be arranged lengthwise of the stator beam and transverse to the lengthwise fibres.

A fibre volume fraction of the fibre reinforced polymer composite may preferably be 50-80% and most preferably more than 60%.

The stator or stators may be mounted on the beam part by having suitable shape for mounting the stator or stators, that is, by interlocking.

The stator or stators may be made of ferromagnetic material.

According to a second aspect, an elevator is provided. The elevator comprises at least one stator beam according to the first aspect and at least one mover coupled to an elevator car and configured to be moved along the stator beam. The mover comprises at least one unit of electromagnetic components arranged to face the at least one stator and configured to be in electromagnetic engagement with the at least one stator.

The elevator may comprise at least two of said stator beams, and at least two movers configured to be moved along a respective one of said stator beams and coupled to the elevator car.

The elevator may comprise portions of said at least one stator beam being vertical or horizontal.

According to a third aspect, a method for manufacturing a stator beam of an electric linear motor for an elevator is provided. The method comprises:
- obtaining a beam part of the stator beam made of non-magnetic material and at least one stator, wherein the beam part is arranged to accommodate the at least one stator, and
- mounting the at least one stator to the beam part.

The method may comprise obtaining at least two stators and mounting the at least two stators on opposite sides of the beam part.

The present invention provides a stator beam, an elevator and a method for manufacturing the stator beam. Benefit of using non-magnetic beam part is that nonmagnetic material, unlike the materials used in conventional stator beams, does not affect the operation of the magnetic circuit of the electric linear motor as much, thus facilitating designing and operation of the motor. Various other advantages will become clear to a skilled person based on the following detailed description.

The expression "a plurality of" refers herein to any positive integer starting from two, e.g. to two, three, or four.

The expression "a number of" refers herein to any positive integer starting from one, e.g. to one, two, or three.

The terms "first", "second" and "third" do not denote any order, quantity, or importance, but rather are used to distinguish one element from another.

The exemplary embodiments of the present invention presented herein are not to be interpreted to pose limitations to the applicability of the appended claims. The verb "to comprise" is used herein as an open limitation that does not exclude the existence of also un-recited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

The embodiments of the present invention are illustrated by way of example and not by way of limitation in the figures of the accompanying drawings.
Figure 1 illustrates schematically an elevator according to an embodiment of the present invention.
Figure 2 illustrates schematically an elevator according to an embodiment of the present invention.
Figure 3 illustrates schematically an electric linear motor according to an embodiment of the present invention.
Figure 4 illustrates schematically a stator beam according to an embodiment of the present invention.
Figure 5 illustrates schematically an electric linear motor according to an embodiment of the present invention.
Figure 6 illustrates a flow diagram of a method according to an embodiment of the present invention.

### DESCRIPTION OF SOME EMBODIMENTS

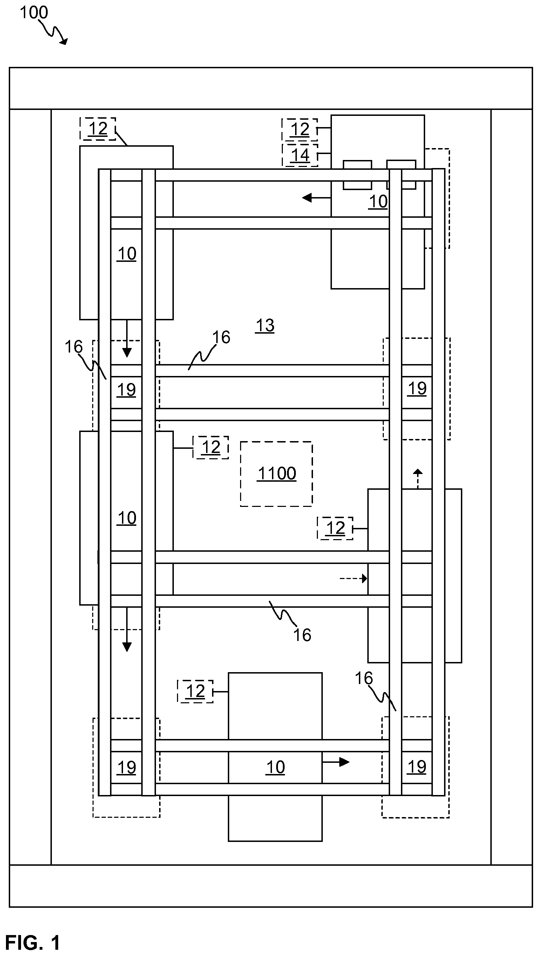

Figure 1 illustrates schematically an elevator 100 according to an embodiment of the present invention. The elevator 100 may comprise at least one or a plurality of elevator cars 10 moving in the elevator shaft 13 or the elevator car pathway 13. The elevator car(s) 10 may comprise a first electrical drive 12, such as a frequency converter or an inverter, and/or a first energy storage 14 such as a battery or batteries, which are shown with dashed lines indicating the optionality of the feature. The first electrical drive 12 may be utilized for operating a mover arranged to the elevator car 10 for moving the car 10 along the elevator shaft 13. There may also be other electrically operated equipment in the elevator car 10 such as lighting, doors, user interface, emergency rescue equipment, etc. The first electrical drive 12 or a further electrical drive, such as an inverter or a rectifier, may be utilized for operating one or several of said other equipment of the elevator car 10. The first energy storage 14 may, preferably, be electrically coupled to the first electrical drive 12, for example, to the intermediate circuit of the drive, for providing electrical power to the first electrical drive 10 and/or for storing electrical energy provided by the first electrical drive 14 or a further electrical drive or other electrical power source.

There are preferably at least two landing floors, having landing floor doors 19 or openings 19, comprised in the elevator 100. There may also be doors comprised in the elevator car 10. Although shown in Fig. 1 that there are two horizontally separated sets, or "columns", of vertically aligned landing floors, there could as well be only one column as in conventional elevators or more than two, for example, three.

Regarding the elevator shaft 13, it may be such as defining substantially closed volume in which the elevator car 10 is adapted and configured to be moved. The walls may be, for example, of concrete, metal or at least partly of glass, or any combination thereof. The elevator shaft 13 herein refers basically to any structure or pathway along which the elevator car 10 is configured to be moved.

As can be seen in Fig. 1 with respect to the multi-car elevator 100, the elevator car 10 or cars 10 may be moved along the elevator shaft 13 vertically and/or horizontally depending on the direction of stator beams 16. According to embodiments similar to one in Fig. 1 in this respect, the elevator car 10 or cars 10 may be configured to be moved along a number of vertical 16 and/or horizontal 16 stator beams, for example, two beams such as in Fig. 1. The stator beams 16 are part of an electric linear motor of the elevator 100 utilized to move the elevator car 10 or cars 10 in the elevator shaft 13. The stator beams 16 may, preferably, be arranged in fixed manner, that is, stationary with respect to the elevator shaft 13, for example, to a wall of the shaft by fastening portions, which may be arranged to rotatable at direction changing positions of the elevator car 10.

The elevator 100 may comprise an elevator control unit 1100 for controlling the operation of the elevator 100. The elevator control unit 1100 may be a separate device or may be comprised in the other components of the elevator 100 such as in or as a part of the electrical drive 12. The elevator control unit 1100 may also be implemented in a distributed manner so that, e.g., one portion of the elevator control unit 1100 may be comprised in the electrical drive 12 and another portion in the elevator car 10. The elevator control unit 1100 may also be arranged in distributed manner at more than two locations or in more than two devices.

The elevator control unit 1100 may comprise one or more processors, one or more memories being volatile or non-volatile for storing portions of computer program code and any data values and possibly one or more user interface units. The mentioned elements may be communicatively coupled to each other with e.g. an internal bus.

The processor of the elevator control unit 1100 may at least be configured to implement at least some method steps as described hereinlater. The implementation of the method may be achieved by arranging the processor to execute at least some portion of computer program code stored in the memory causing the processor, and thus the elevator control unit 1100, to implement one or more method steps as described hereinlater. The processor may thus be arranged to access the memory and retrieve and store any information therefrom and thereto. For sake of clarity, the processor herein refers to any unit suitable for processing information and control the operation of the elevator control unit 1100, among other tasks. The operations may also be implemented with a microcontroller solution with embedded software. Similarly, the memory is not limited to a certain type of memory only, but any memory type suitable for storing the described pieces of information may be applied in the context of the present invention.

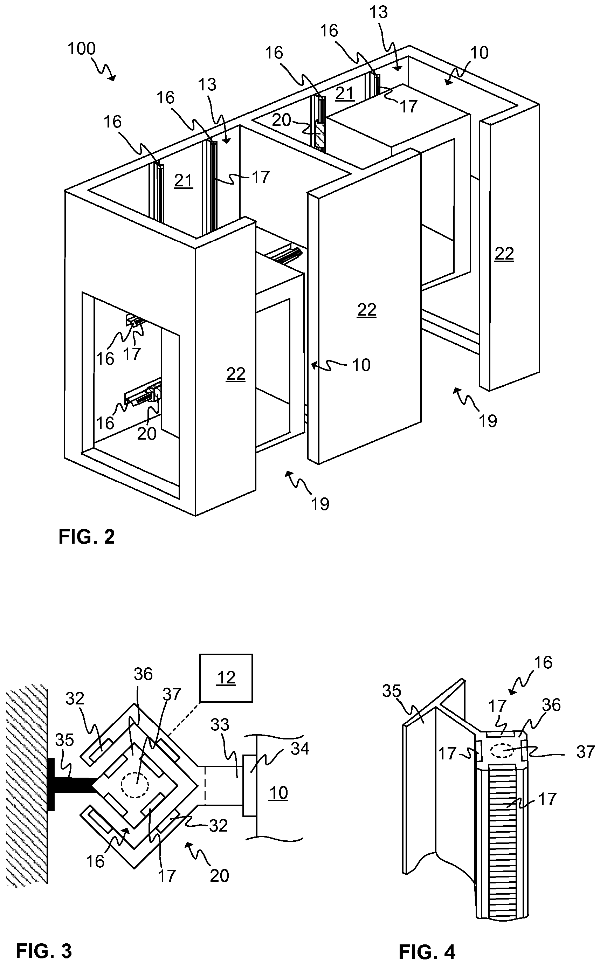

Figure 2 further illustrates schematically a part of an elevator 100 according to an embodiment of the present invention. There are two elevator cars 10 configured to be moved in the elevator shaft 13 by an electric linear motor. The electric linear motor comprises a stator 17 or stators 17 comprised in a stator beam 16 or beams 16, in this case two. A stator beam 16 may be arranged vertically or horizontally, that is, in Figs. 1 and 2 the elevator 100 comprises vertical stator beams 16 and horizontal stator beams 16. However, the stator beam 16 or beams 16 may also be arranged to any direction(s) in which the elevator car 10 is desired to be moved. One stator beam 16 may, preferably, be comprised of a plurality of stator beam parts arranged one after another to yield the desired length for the stator beam 16 in whole.

The electric linear motor further comprises a mover 20 or movers 20 arranged or coupled to the elevator car 10 or cars 10. The mover 20 or movers 20 may be arranged to be in electromagnetic engagement with the stator 17 or stators 17 comprised in the stator beam 16 along which the mover 20 may be configured to be moved, thus enabling the movement of the elevator car 10 with which the mover 20 has been mechanically coupled with.

In Fig. 2, the stator beams 16 are arranged to the back wall 21 of the elevator shaft 13. It should be noted, however, that the elevator shaft 13 refers herein to the any elevator car pathway 13 which, as described above, may include vertical parts, horizontal parts, and/or parts having a third direction different with respect to vertical and horizontal directions. For example, the part of the elevator shaft 13 depicted in Fig. 2 essentially comprises two vertical parts and one horizontal part. In Fig. 2, the elevator shaft 13 or the elevator car pathway 13 further comprises a front wall 22. The front wall 22 may, preferably, comprise an opening 19 for entering into the elevator car 10 or cars 10.

Although shown in Fig. 2 that the opening 19 for entering the elevator cars 10 is arranged only at vertical parts of the elevator shaft 13, the opening 19 may as well be arranged to the horizontal part or any part of the elevator shaft 13. It should be noted, however, that the elevator shaft 13 may in some cases comprise only one wall or a structure arranged to accommodate the necessary equipment such as the stator beam 16. Thus, the elevator shaft 13 or the elevator car pathway 13 does not necessarily have to define a substantially closed volume, that is, surrounded by wall elements or glass or any other structures as long as there is at least a support structure to support the stator beam(s) 16.

The elevators 100, or particularly the elevator shaft 13 or shafts 13 thereof, according to the various embodiments of the present invention may comprise at least one, however, preferably more than one, positions for changing the direction of movement of the elevator car 10 at which the direction of movement of an elevator car 10 may be changed from one direction to another, which said another is un-parallel relative to said one direction, for example, such as when changing the direction between the vertical and horizontal directions. In Fig. 2, there are shown two such positions. The changing of the direction at these positions may be implemented, for example, by rotatable stator beam parts and/or rotatable movers 20 coupled to the elevator car 10.

Figure 3 illustrates schematically an electric linear motor, or at least a part thereof, according to an embodiment of the present invention. The electric linear motor comprises a mover 20, preferably, a C-shaped or U-shaped (not shown) mover 20. The mover 20 comprises at least one or several permanent magnets and/or magnetic core element(s) or ferromagnetic material, and optionally, a unit or units of electromagnetic components 32 comprising at least one coil or winding. The unit or units of electromagnetic components 32 may, preferably, be comprised in the mover 20 and adapted to face the stator 17 or stators 17 of the stator beam 16, as shown in Fig. 3, for instance. However, the mover 20 may comprise only one or several permanent magnets and/or magnetic core element(s) or ferromagnetic material, while the unit or units of electromagnetic components 32 reside in the stator beam 16. The unit or units of electromagnetic components 32 may be part of the stator 17 thus enabling forming of the controllable magnetic field for moving the mover 20 in electromagnetic engagement with the stator 17. The units of electromagnetic components 32, when comprised in the mover 20, may be arranged to be in electromagnetic engagement with the stators 17 for moving the mover 20 along the stator beam 16. There may also be a support portion 33 by which mover 20 may be attached or coupled to the elevator car 10, for example, to the back wall of the car 10. As can be seen, the mover 20 may be shaped and designed in such a way as to enable the movement of the mover 20 along the stator beam 16 without interference from the fastening or support portions 35, 33. There may, furthermore, be further support portions 34 utilized to attach the mover 20 to the elevator car 10. The further support portion 34 may be rotatable, for instance.

The movement of the mover 20 along the stator beam 16 may be implemented by known control methods, such as, field-oriented or vector control or the like. The basic idea is to produce an alternating magnetic field, for example by an electrical drive 12, by injecting current to a unit of electromagnetic components 32 of the mover 20, such as to a winding or coil thereof. The unit of electromagnetic components 32 facing the stator 17 then co-acts with the stator 17 through the electromagnetic engagement and produces a force which moves the mover 20 and thus the elevator car 10 along the stator beam 16.

According to a preferable embodiment of the present invention, the stator beam 16, as shown in Fig. 3, may comprise at least one stator 17, however, preferably two or four stators 17 arranged on opposite or each side of the stator beam 16. The stator beam 16 further comprises a beam part 36 which is made mainly of non-magnetic material, that is, material that is not capable of being magnetized. "Capable of being magnetized" refers herein to a degree of magnetization which may be regarded as magnetization suitable for being utilized in magnetic circuits in a typical manner and, thus, relates to materials which are substantially affected by the magnetic field or flux. Non-magnetic materials may be those which are not affected or are slightly affected by magnetic field or flux.

Non-magnetic materials may be, for example, paramagnetic, diamagnetic or weakly ferromagnetic materials, or combinations thereof, with a relative magnetic permeability less than or equal to 2.0 or advantageously less than or equal to 1.5. These materials may include, for example, some metals and alloys, polymers, wood, and glass. Metallic non-magnetic materials may be, for example, non-magnetic steels and cast irons, copper and aluminium. Steels and cast irons may be made non-magnetic, for example, by producing austenitic structure in them, for example, by suitable alloying. They may comprise, for example, nickel and chromium. "Mainly" refers herein to the fact that the beam part 36 may include other materials as well but is mostly of non-magnetic material, that is, having over 50%, preferably over 60% and most preferably over 75% of non-magnetic material. Preferably, the beam part 36 may be such that there is non-magnetic material extending in the longitudinal direction of the beam part 36 continuously across the whole beam part 36.

In general, the beam part 36 may comprise non-metal, preferably non-magnetic, material. These materials may include, for example, however, not limited to, polymers, or polymer composites, wood, and/or glass.

According to some embodiments of the present invention, the beam part 36 material may comprise glass fibre(s) or carbon fibre(s). Furthermore, aramid fibre(s) may be used. According to some embodiments, the parts made of fibre material, such as aramid fibre, may be coated with material withstanding heat in order to improve the resistance of the fibre material to heat, for example in case of a building fire. The use of aramid fibres can be advantageous due to its ability to withstand mechanical impulses better than glass or carbon fibres.

The use of carbon fibre material in the beam part 36 provides a surprising advantage, in addition to other factors such as low weight, by its negative coefficient of thermal expansion. For example, if the temperature of the stator 17 increases and, thus the stator 17 expands, the beam part 36 may be used to provide compensation by shrinking, as the stator beam 16 is fixedly attached to the surrounding structures, due to its negative thermal expansion coefficient, that is, giving more room for the stator 17 to expand and alleviating the mechanical stress caused by the expansion of the stator 17 to the stator beam 16.

According to an embodiment of the present invention, the beam part 36 may comprise fibre reinforced polymer composite. The fibre reinforced polymer composite may comprise aramid fibre(s), carbon fibre(s) or glass fibre(s). Furthermore, fibres of the fibre reinforced polymer composite may be arranged lengthwise of the stator beam and transverse to the lengthwise fibres, thus providing support in the specific direction for bearing the load caused by the elevator car 10 and passengers (lengthwise of the stator beam), if any, for instance, and against the forces between the mover 20 and the stator 17 affecting in the direction of normal of the stator beam 16 (transverse to the lengthwise fibres). However, the fibres of the fibre reinforced polymer composite may alternatively or in addition be arranged to any direction required in order to provide support against forces affecting along a certain direction. Thus, the fibres may be arranged to have, for example, 30, 45, or 60 degrees with respect to the longitudinal direction of the stator beam 16. A fibre volume fraction of the fibre reinforced polymer composite may preferably be 50-80% and most preferably more than 60%.

Alternatively or in addition, the fibre reinforced polymer composite may comprise non-elastomeric polymer matrix material. The non-elastomeric polymer matrix may comprise epoxy resin, phenolic plastic, polyester or vinyl ester.

Alternatively or in addition, the fibre reinforced polymer composite may comprise fabric or weave type reinforcement. The reinforcement may be 3D printed or 3D woven, that is, made by utilizing an additive manufacturing method.

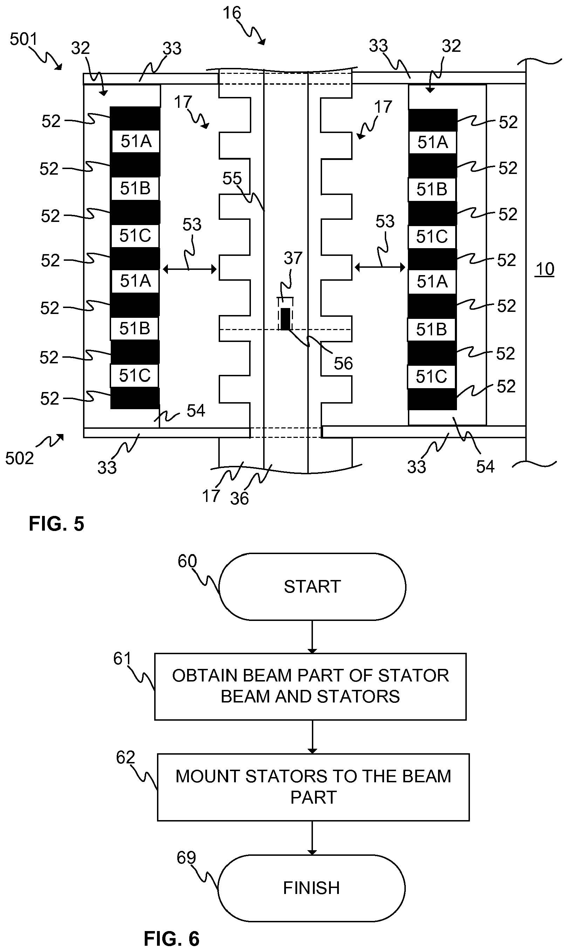

According to various embodiments of the present invention, the stator beam 16 may further comprise a hole 37 or a recess 37 or a through-hole 37, that is, the stator beam 16 is hollow, essentially in the stator beam 16. The hole 37 may be utilized for locking and/or aligning consecutive stator beam parts together, for example, by a pin 56 or a dowel 56, such as shown in Fig. 5. The dowel 56 may be inserted into the holes 37 of both of the consecutive stator beam parts or only other one of the stator beam parts comprises the hole while the other comprises the dowel 56 as a counter-part for the aligning and, preferably, locking the stator beam parts relative to each other. The through-hole 37 further reduces the mass of the stator beam 16.

Manufacturing the stator beam 16 of non-magnetic, such as composite, material, for example, glass fibre composite, facilitates an accurate manufacturing of the stator beam 16 with respect to manufacturing of conventional stator beams which are manufactured by using ferromagnetic material, such as steel, having high permeability and thus significant magnetic properties. Furthermore, the stator beam 16 made of non-magnetic material as described herein also facilitates the installation and operation of the electric linear motor as the composite stator beam 16, such as comprising glass or carbon fibre material, undergoes less thermal expansion relative to conventional stator beams 16. Still another benefit of using the composite stator beam 16 is that composite is non-magnetic material unlike some metals and thus affects less the operation of the magnetic circuit of the linear electric motor. The stators 17 arranged to the stator beam 16 of non-magnetic material, such as of composite, facilitates designing the motor from the magnetic coupling between the mover 20 and the stator 17 point of view.

Figure 4 illustrates schematically a part of the stator beam 16, or a stator beam part, according to an embodiment of the present invention by a perspective view. The part of the stator beam 16 comprises at least one stator 17 extending substantially along the whole stator beam 16. There may, advantageously, be four stators 17 arranged at all four sides of the stator beam 16, such as in Fig. 3. There may also be a fastening portion 35 or portions 35 by which said part 16 may be attached in fixed manner to the structures, such as a wall, of the elevator shaft 13. The fastening portion 35 may also be a separate fastening portion which may then be attached to the stator beam 16 for arranging the stator beam 16 into the elevator shaft 13 or the fastening portion 35 may be an integrated part of the stator beam 16 or a part thereof. The stators 17 may, preferably, be of ferromagnetic material and comprise teeth on their outer surface for providing a suitable magnetic circuit for co-acting with the mover 20. According to a preferable embodiment of the present invention, the stator beam 16 or beams 16 are passive in the sense that they do not comprise controllable elements or components, such as coils, for controlling the movement of the mover 20 along the stator beam 16. The stator beam 16 or beams 16 may still, however, comprise such active elements as elements utilized for aligning two parts of the stator beam 16 with respect to each other, such as, for example, the dowel 56 or the pin 56, such as shown in Fig. 5.

According to another embodiment of the present invention, the mover 20 coupled to the elevator car 10 comprises at least one permanent magnet and/or part or parts of magnetic circuit made of ferromagnetic material. According to this embodiment, the stator 17 comprises controllable electromagnetic component or components such as units of electromagnetic components. Thus the mover 20 may be passive and the stator 17 may be configured to produce the magnetic force for moving the mover 20.

In Fig. 4, a stator 17 or each of the stators 17 may be attached to the stator beam 16 by having suitable shape or a recess into which the stator 17 may be arranged in, that is, by interlocking the stator(s) 17 to the stator beam 16. This may be implemented by having protruding portions in the stator beam 16 for keeping the stator 17 in place. The stator 17 or stators 17 may be, for example, slid into place, or into the recess arranged to the stator beam 16, from one end of the stator beam 16. Alternatively or in addition, the stator 17 may be attached to the stator beam 16 by using adhesives, such as using introducing glue on the back 55 (illustrated in Fig. 5) of the stator 17 before arranging the stator 17 into to the recess in the stator beam 16.

Figure 5 illustrates schematically an electric linear motor, or at least a part thereof, according to an embodiment of the present invention. The stator beam 16 comprises stators 17 on opposite sides of the stator beam 16. Said stators 17 in Fig. 5 may be, for example, two of the fours stators 17 as shown in Figs. 3 and 4. The stators 17 comprise stator teeth having a distance between two consecutive teeth. The mover 20 comprises units of electromagnetic components 32 arranged to face the stators 17 of the stator beam 16 and configured to establish an electromagnetic engagement between said units 32 and stators 17, preferably, over an air gap 53 to enable movement of the mover 20 with respect to the stator beam 16.

The mover 20 preferably comprises coils 51A-51C comprised in the units of electromagnetic components 32 that may be arranged around, for example, magnetic teeth arranged to the armature of the mover 20. In this case, each one of said units 32 comprises coils 51A-51C, for example for three-phase current injection by an electrical drive 12, and, optionally, preferably permanent magnets 52 and/or ferromagnetic material 54 or mover irons 54. There may, alternatively, be more or fewer coils. The coils 51A-51C may be controlled, for example, so as to inject three-phase current having a phase shift of 120 degrees between two phases. The coils 51A-51C may be controlled, as stated hereinbefore, by an electrical drive 12 such as a frequency converter or an inverter. If an electrical energy storage 14, such as a battery, coupled to the elevator car 10 is being utilized, the electrical drive 12, such as a frequency converter, may draw electrical power from the storage to convert the direct current (DC) of the battery to suitable AC for the mover 20 to be moved along the stator beam 16.

According to an embodiment of the present invention, the stator beam 16 may comprise several consecutive stator beam parts, as stated hereinbefore, to form the whole stator beam 16. Consecutive stator beam parts may be aligned and, preferably, locked with respect to each other by a pin 56 or dowel 56 arranged at the seam of two consecutive stator beam parts. The pin 56 or dowel 56 may such that it is wider at the base with respect to the free end. The wider base then presses against the wall of the hole 37 for locking the stator beam parts tightly together.

The stator beam 16 according to various embodiments may be manufactured by utilizing pultrusion process for manufacturing composite, such as glass fibre composite, material.

Figure 6 illustrates a flow diagram of a method according to an embodiment of the present invention.

At 60, referring to a start-up phase, the necessary tasks such as obtaining components and systems, and calibration and other configuration may take place. Specific care must be taken that the individual elements and material selections work together.

At 61, the beam part 36 of the stator beam 16, or of at least a stator beam part thereof, is being obtained, for example, as a result of composite pultrusion process, by using glass fibre composite, or obtained as a ready-made piece. However, other methods may also be used in case of other non-magnetic materials. The beam part 36 comprises recesses or designated positions for the stator 17 or stators 17. The stator 17 or stators 17 are obtained which are intended to be coupled or attached to the already obtained or obtainable beam part 36 comprising said designated positions for the stator 17 or stators 17. The beam part 36 and the stator 17 or stators 17 may be obtained simultaneously or in any order, depending on the embodiment.

The beam part 36 is arranged to accommodate the stator 17 or stators 17, such as by said designated positions, for example, recesses in the beam part 36 for the stator(s) 17.

The beam part 36 may be obtained by utilizing an additive manufacturing method or "3D printing".

At 62, the stator 17 or stators 17 are being attached or mounted to the beam part 36 by utilizing adhesive or by arranging the stator(s) 17 to the recesses which are shaped, for example, by using protrusions, to hold the stator(s) 17 in place.

At 69, the method execution is ended or stopped and the stator beam 16, or at least a part of it, has been obtained as a result of the method.

The method may according to an embodiment of the present invention comprise providing a through-hole 37 to the beam part 36, that is, making the beam part 36 hollow, which further makes the stator beam 16 lighter and facilitates arranging the stator beam 16 to long elevator shafts 13.

The specific examples provided in the description given above should not be construed as limiting the applicability and/or the interpretation of the appended claims. Lists and groups of examples provided in the description given above are not exhaustive unless otherwise explicitly stated.

## Claims

1. A stator beam (16) of an electric linear motor for an elevator (100), **characterized in that** the stator beam (16) comprises a beam part (36) made of non-magnetic material and at least one stator (17) arranged to extend on a side of the beam part (36) along the stator beam (16).

2. The stator beam (16) according to claim 1, comprising at least two stators (17) made of ferromagnetic material arranged on opposite sides of the stator beam (16).

3. The stator beam (16) according to any one of the preceding claims, wherein the stator beam (16) is hollow or has a through-hole (37) in a longitudinal direction of the stator beam (16).

4. The stator beam (16) according to any one of the preceding claims, wherein the beam part (36) comprises non-metal material.

5. The stator beam (16) according to any one of the preceding claims, wherein the beam part (36) comprises fibre reinforced polymer composite.

6. The stator beam (16) according to claim 5, wherein the fibre reinforced polymer composite comprises aramid fibre, carbon fibre or glass fibre.

7. The stator beam (16) according to claim 5, wherein fibres of the fibre reinforced polymer composite are arranged lengthwise of the stator beam and transverse to the lengthwise fibres.

8. The stator beam (16) according to claim 5, wherein a fibre volume fraction of the fibre reinforced polymer composite is preferably 50-80% and most preferably more than 60%.

9. The stator beam (16) according to claim 5, wherein the fibre reinforced polymer composite comprises non-elastomeric polymer matrix material.

10. The stator beam (16) according to claim 9, wherein the non-elastomeric polymer matrix comprises epoxy resin, phenolic plastic, polyester or vinyl ester.

11. The stator beam (16) according to claim 5, wherein the fibre reinforced polymer composite comprises fabric or weave type reinforcement.

12. The stator beam (16) according to claim 11, wherein the reinforcement is 3D printed or 3D woven.

13. An elevator (100), **characterised in that** the elevator (100) comprises at least one stator beam (16) according to any one of the preceding claims and at least one mover (20) coupled to an elevator car (10) and configured to be moved along the stator beam (16), wherein the mover (20) comprises at least one unit of electromagnetic components (32) arranged to face the at least one stator (17) and configured to be in electromagnetic engagement with the at least one stator (17).

14. The elevator (100) according to claim 13, comprising at least two of said stator beams (16), and at least two movers (20) configured to be moved along a respective one of said stator beams (16) and coupled to the elevator car (10).

15. The elevator (100) according to claim 13 or 14, comprising portions of said at least one stator beam (16) being vertical or horizontal.

16. A method for manufacturing a stator beam (16) of an electric linear motor for an elevator (100), **characterised in that** the method comprises:
- obtaining (61) a beam part (36) of the stator beam (16) made of non-magnetic material and at least one stator (17), wherein the beam part (36) is arranged to accommodate the at least one stator (17), and
- mounting (62) the at least one stator (17) to the beam part (36).

17. The method according to claim 16, comprising obtaining at least two stators (17) and mounting the at least two stators (17) on opposite sides of the beam part (36).
